# EUROPÄISCHE PATENTSCHRIFT

(11) **EP 0 548 622 B1**
(45) Veröffentlichungstag und Bekanntmachung des Hinweises auf die Patenterteilung: **15.03.1995**
(21) Anmeldenummer: 92120633.0
(22) Anmeldetag: 03.12.1992
(51) Int. Cl.: B27B 9/02, B25B 21/00, F16B 2/06, B25B 31/00

(54) **Arretiervorrichtung**
Locking device
Dispositif d'arrêt

(30) Priorität: 20.12.1991 DE 4142282
(43) Veröffentlichungstag der Anmeldung: 30.06.1993
(73) Patentinhaber: ROBERT BOSCH GMBH, 70442 Stuttgart (DE)
(72) Erfinder: Matzo, David, Dipl.-Ing., W-7022 Leinfelden-Echterdingen (DE)

(56) Entgegenhaltungen:
- CH-A- 393 716
- DE-A- 3 541 267
- DE-A- 3 607 283
- DE-C- 664 003

## Beschreibung

### Stand der Technik

Die Erfindung geht aus von einer Arretiervorrichtung zum kraftschlüssigen Festklemmen zweier relativ zueinander beweglicher Teile, insbesondere für die Schnittwinkel- oder Schnittiefeneinstellung bei Elektrohandsägen, der im Oberbegriff des Anspruchs 1 definierten Gattung.

Bei Elektrohandkreissägemaschinen sind Arretier- oder Feststellvorrichtungen dieser Art bekannt, bei welchen der Bolzen als Gewindekopfschraube und das Klemmelement als Flügelmutter ausgebildet ist. Die Gewindekopfschraube ist durch ein Vierkantloch in einer mit dem Maschinengehäuse verbundenen Lasche und durch einen Schlitz in einem Bogenstück hindurchgesteckt, das fest mit dem Auflage- und Führungsschlitten der Maschine verbunden ist. Die Lasche und das Bogenstück liegen aneinander und werden durch Schraubenkopf und Flügelschraube kraftschlüssig aneinandergepreßt. Nach Lösen der Flügelschraube können die beiden Teile zur Verschwenkung des Führungsschlittens und damit zur Einstellung der Schnittiefe oder des Schnittwinkels gegeneinander verschoben werden. Wird durch Anziehen der Flügelmutter die Klemmverbindung wieder hergestellt, ist der Führungsschlitten unbeweglich am Maschinengehäuse festgelegt. Zur Herstellung der Klemmverbindung muß die Flügelschraube mehrere Umdrehungen ausführen und am Schluß sehr fest angezogen werden, damit sich der Führungsschlitten während des Arbeitens mit der Handkreissäge nicht verstellt.

### Vorteile der Erfindung

Die erfindungsgemäße Arretiervorrichtung mit den kennzeichnenden Merkmalen des Anspruchs 1 hat den Vorteil, daß kein längeres Drehen des Klemmelements zum Herstellen und Lösen der Klemmverbindung notwendig ist. Zum Öffnen und Schließen der Arretiervorrichtung muß der Bediener den Handhebel nur um einen Bruchteil einer Umdrehung bewegen, so daß man hier uneingeschränkt von einer Schnellarretierung bzw. Schnellklemmung sprechen kann. Durch die Steigungsabnahme am Kurvenbahnende wird eine Art Raststellung des mindestens einen Führungsstiftes in der Schließstellung der Arretiervorrichtung erreicht, wodurch ein sicheres Klemmen gewährleistet ist.

Durch die in den weiteren Ansprüchen aufgeführten Maßnahmen sind vorteilhafte Weiterbildungen und Verbesserungen der im Anspruch 1 angegebenen Arretiervorrichtung möglich. Bei einer zweckmäßigen Ausführungsform der Erfindung ist der Bolzen in einem bis zum freien Ende reichenden Bolzenabschnitt im Durchmesser reduziert, und der Bahnanfang der mindestens einen eingetieften Kurvenbahn tritt in der am Übergang zu dem im Durchmesser reduzierten Bolzenabschnitt ausgebildeten Ringschulter frei aus. Bevorzugt werden drei um gleiche Umfangswinkel gegeneinander versetzte eingetiefte Kurvenbahnen im Bolzen vorgesehen, wobei alle Bahnanfänge in der Ringschulter austreten. Entsprechend sind in der Klemmhülse drei um entsprechende Umfangswinkel gegeneinander versetzte radiale Führungsstifte vorgesehen, von denen jeweils einer in eine der Kurvenbahnen hineinragt. Durch diese Ausbildung ist eine einfache Montage der Arretiervorrichtung möglich. Der Bolzen wird durch die beiden Teile hindurchgesteckt und die mit dem Handhebel einstückige Klemmhülse auf den Bolzen aufgeschoben. Die in das Hülseninnere hineinragende Führungsstifte treten dabei im Bereich der Ringschulter in die Kurvenbahnen ein.

Um während des Betriebs eine ungewollte Demontage der Arretiervorrichtung durch Austreten der Führungsstifte aus den Kurvenbahnen zu unterbinden, ist gemäß einer vorteilhaften Ausführungsform der Erfindung am Bolzen ein Anschlag und an der Klemmhülse ein Gegenanschlag angeordnet, die zur Begrenzung der axialen Verschiebebewegung zusammenwirken. Die Anordnung von Anschlag und Gegenanschlag ist dabei so getroffen, daß bei maximalem Verschiebehub der Klemmhülse auf dem Bolzen die Führungsstifte nicht den Bahnanfang erreichen und dort nicht aus den Kurvenbahnen austreten können. Bevorzugt werden dabei Anschlag und Gegenanschlag von einer am Bolzenende befestigten Scheibe und einem im Hülseninnern radial vorstehenden Ringbund gebildet. Die Abmessungen von Ringbund und Scheibe sind so getroffen, daß die Scheibe im Hülseninnern frei beweglich ist und sich an der ihr zugekehrten Ringfläche des Ringbundes anzulegen vermag.

Gemäß einer bevorzugten Ausführungsform der Erfindung wird der Handhebel durch eine Feder in Richtung Zustellbewegung der Arretiervorrichtung vorgespannt. Dadurch legt der freigegebene Handhebel die Klemmhülse immer leicht an dem zu klemmenden zweiten Teil an. Dies erleichtert die Feineinstellung der Relativlage der zu klemmenden Teile.

Die Federvorspannung des Handhebels wird gemäß einer vorteilhaften Ausführungsform der Erfindung dadurch erreicht, daß eine Torsions- oder Schenkelfeder in einer im Ringbund der Klemmhülse vorgesehenen Nut eingelegt ist, die einerseits mit der Klemmhülse und andererseits mit dem Bolzen verbunden und in Richtung der Zustellbewegung des Handhebels vorgespannt ist.

### Zeichnung

Die Erfindung ist anhand eines in der Zeichnung dargestellten Ausführungsbeispiels in der nachfolgenden Beschreibung näher erläutert. Es zeigen:
- Fig. 1: einen Längsschnitt einer Arretiervorrichtung,
- Fig. 2: einen Schnitt des Handhebels der Arretiervorrichtung gemäß Linie II-II in Fig. 1,
- Fig. 3: eine perspektivische Darstellung einer Seitenansicht des Bolzens der Arretiervorrichtung in Fig. 1, teilweise geschnitten.

### Beschreibung des Ausführungsbeispiels

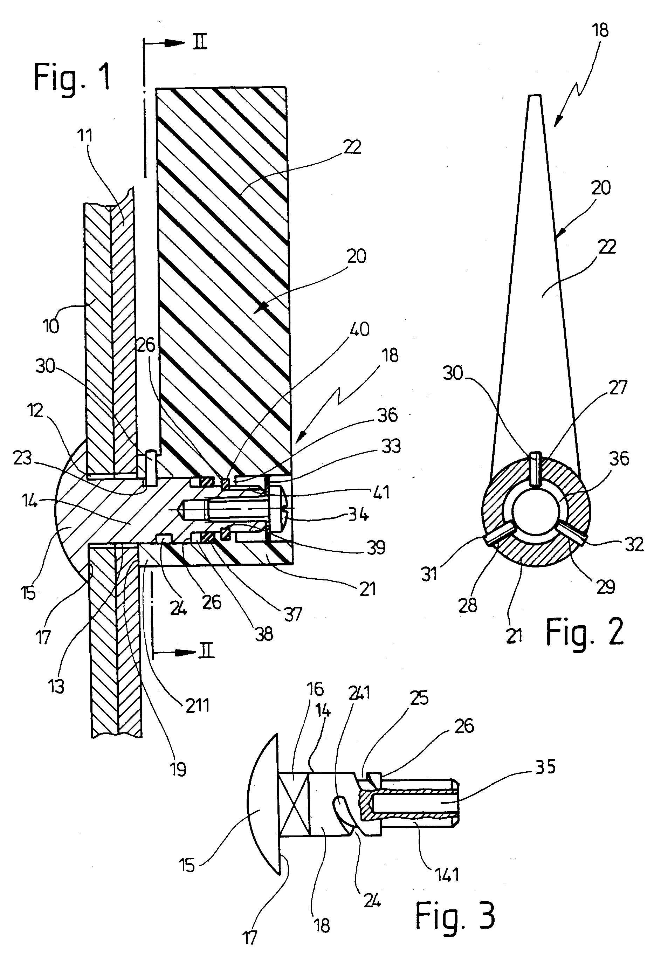

Die in Fig. 1 im Schnitt dargestellte Arretier- oder Feststellvorrichtung dient zum kraftschlüssigen Festklemmen zweier Teile 10,11, die gegeneinander verschoben werden können. In einem Beispiel kann das Teil 10 eine mit dem Maschinengehäuse einer Elektrohandkreissäge fest verbundene Lasche und das Teil 11 ein mit dem Auflage- und Führungsschlitten der Maschine fest verbundenes Bogenstück sein. Durch Verschiebung des Bogenstückes relativ zur Lasche, was in Fig. 1 in Richtung Zeichenblattiefe erfolgt, kann der Führungsschlitten der Maschine um eine Schwenkachse geneigt und damit die Schnittiefe des Sägeblatts eingestellt werden. Zur Aufnahme der Arretiervorrichtung weist das Teil 10 (Lasche) ein Vierkantloch 12 und das Teil 11 (Bogenstück) einen langgestreckten bogenförmigen Schlitz 13 auf. Durch das Vierkantloch 12 und den Schlitz 13 ist ein Bolzen 14 mit Bolzenkopf 15 der Arretiervorrichtung hindurchgesteckt. Eine perspektivische Darstellung des Bolzens 14 mit Bolzenkopf 15 in Seitenansicht ist in Fig. 3 zu sehen. Wie dort zu erkennen ist, ist der Bolzen 14 in einem sich unmittelbar an den Bolzenkopf 15 anschließenden kleinen Bolzenbereich 16 beidseitig abgeflacht oder als Vierkant ausgebildet. Die Abmessungen dieses Bolzenbereichs 16 korrespondieren mit den Abmessungen des Vierkantloches 12 im Teil 10, so daß der Bolzen 14 undrehbar im Teil 10 gehalten ist. Die Unterseite des als Rundkopf ausgebildeten Bolzenkopfes 15 bildet eine Andruckfläche 17 zum Anpressen an das Teil 10 bei Schließen der Arretiervorrichtung.

Zum Herstellen der kraftschlüssigen Klemmverbindung dient ein Klemmelement 18 der Arretiervorrichtung, das auf dem Bolzen 14 aufsitzt und so ausgebildet ist, daß es sich durch Drehung auf dem Bolzen 14 axial verschiebt und sich mit einer Andruckfläche 19 an das andere Teil 11 anpreßt. Das Klemmelement 18 ist hier als Handhebel 20 mit Klemmhülse 21 und davon radial abstrebendem Hebelarm 22 ausgebildet. Hebelarm 22 und Klemmhülse 21 sind dabei als einstückiges Kunststoffteil gefertigt. Die Klemmhülse 21 steht dabei mit einem kurzen Klemmbund 211 über den Hebelarm 22 vor, wobei die ringförmige Stirnfläche des Klemmbundes 211 die Andruckfläche 19 bildet.

Zur Realisierung der kombinierten Axial-/Drehbewegung des Handhebels 20 auf dem Bolzen 14 trägt der Bolzen 14 in seiner äußeren Umfangsfläche drei eingetiefte Kurvenbahnen 23,24,25, die gegeneinander um einen Umfangswinkel von jeweils 120° versetzt sind. Auf dem Bolzen 14 ist durch eine Durchmesserreduzierung des hinteren, bis zum freien Ende reichenden Bolzenabschnitts 141 eine Ringschulter 26 ausgebildet. In dieser Ringschulter 26 tritt jeder Bahnanfang der Kurvenbahnen 23 - 25 aus. Die drei Kurvenbahnen 23,24,25 erstrecken sich von ihrem Bahnanfang zum Bolzenkopf 15 hin, wobei ihre Steigung in Umfangsrichtung zunächst zunimmt und am Bahnende wieder abnimmt. Dieses ist in Fig. 3 für die Kurvenbahn 24 gut zu sehen. Dort verläuft das Bahnende 241 etwa rechtwinklig zur Bolzenachse.

Wie aus Fig. 2 hervorgeht, sind in dem Klemmbund 211 drei in Umfangsrichtung um jeweils 120° versetzte Radialbohrungen 27,28,29 eingebracht. In jeder Radialbohrung 27,28,29 ist ein Führungsstift 30 bzw. 31 bzw. 32 derart eingesetzt, daß er radial ins Hülseninnere vorsteht. Wie aus Fig. 1 hervorgeht, greift bei zusammengesetzter Arretiervorrichtung jeder Führungsstift 30,31,32 in eine der Kurvenbahnen 23 - 25 hinein, so daß durch Drehung der Klemmhülse 21 diese durch die Führungsstifte 30 - 32 entlang der Kurvenbahnen 23 - 25 verschoben und damit auf dem Bolzen 14 axial bewegt wird.

Um zu verhindern, daß die Führungsstifte 30 - 32 aus den Kurvenbahnen 23 - 25 austreten, ist auf dem freien Ende des Bolzen 14 eine radial überstehende Scheibe 33 mittels einer Linsenschraube 34 befestigt, die in eine am Stirnende mündende axiale Sackbohrung 35 (Fig. 3) eingeschraubt ist. Der Außendurchmesser der Scheibe 33 ist wenig kleiner bemessen als der lichte Durchmesser der Klemmhülse 21, so daß die Scheibe 33 sich zusammen mit dem Bolzen 14 in der Klemmhülse 21 verschieben kann. Etwa in der Mitte der Klemmhülse 21 springt von der Hülseninnenwand ein Ringbund 36 radial vor. Der lichte Durchmesser des Ringbundes 36 ist wenig größer bemessen als der Außendurchmesser des durchmesserreduzierten Bolzenabschnitts 141, so daß der Bolzen 14 mit seinem Bolzenabschnitt 141 durch den Ringbund 36 hindurchzugleiten vermag. Scheibe 33 und Ringbund 36 wirken als Anschlag und Gegenanschlag zusammen, wobei ihre Anordnung so getroffen ist, daß bei maximalem Hub der Klemmhülse 21 auf dem Bolzen 14 in Richtung Öffnen der Arretiervorrichtung die drei Führungsstifte 30 - 32 nicht die Ringschulter 26 erreichen und somit nicht aus den dort mündenden Kurvenbahnen 23 - 25 austreten können. Im Zusammenbauzustand der Arretiervorrichtung ist zwischen der Ringschulter 36 und der dieser zugekehrten Stirnfläche des Ringbunds 26 hintereinander eine Gummischeibe 37 und eine Ausgleichsscheibe 38 zur Einstellung des Klemmhubs des Handhebels 20 angeordnet. Der Ringbund 36 trägt eine Ringnut 39, in welche eine hier als Schenkelfeder ausgebildete Torsionsfeder 40 eingelegt ist, die endseitig einerseits an der Klemmhülse 21 und andererseits an dem Bolzen 14 festgelegt und so vorgespannt ist, daß sie die Klemmhülse 21 und damit den Handhebel 20 in Fig. 1 in Uhrzeigersinn zu drehen sucht. Dadurch ist der Handhebel 20 bestrebt, sich beim Loslassen immer leicht an das zu klemmende Teil 11 anzulegen. Durch Weiterdrehen des Handhebels 20 wird dieser nun in seiner Endstellung positioniert, wobei die Führungsstifte 30 - 32 in das Bahnende der jeweiligen Kurvenbahn 23 - 25 einlaufen und dort wegen der abnehmenden Steigung der Kurvenbahnen 23 - 25 den Handhebel 20 sicher arretieren.

Zur Montage der Arretiervorrichtung wird der Bolzen 14 durch das Vierkantloch 12 im Teil 10 und durch den Schlitz 13 im Teil 11 hindurchgeführt. Dann wird auf den durchmesserreduzierten Bolzenabschnitt 141 des Bolzens 14 die Ausgleichsscheibe 38 und die Gummischeibe 37 in der genannten Reihenfolge aufgeschoben. Die Torsionsfeder 40 wird in die Ringnut 39 im Ringbund 36 der Klemmhülse 21 eingelegt und dann der Handhebel 20 mit der Klemmhülse 21 auf den Bolzen 14 aufgesetzt. Der Handhebel 20 wird dabei in einer solchen Stellung gehalten, daß die in das Hülseninnere hineinragenden Führungsstifte 30 - 32 im Bereich der Ringschulter 36 in die dort mündenden Kurvenbahnen 23 - 25 eintreten können. Beim Aufschieben der Klemmhülse 21 auf den Bolzen 14 gleitet das bolzenseitige Ende der Torsionsfeder 40 in einer am Bolzenende mündenden Axialnut 41, so daß mit dem Aufschieben des Handhebels 20 auch die Torsionsfeder 40 endseitig am Bolzen 14 festgelegt und vorgespannt ist. Anschließend wird die Scheibe 33 auf die Linsenschraube 34 aufgesteckt und die Linsenschraube 34 in die Sackbohrung 35 eingeschraubt.

Die Erfindung ist nicht auf das vorstehend beschriebene Ausführungsbeispiel beschränkt. Die beschriebenen Arretiervorrichtung hat vielseitige Einsatzmöglichkeiten und kann nicht nur bei Handkreissägen, sondern überall dort verwendet werden, wo zwei relativ zueinander bewegliche Teile wahlweise aneinander festgeklemmt oder zueinander frei beweglich sein sollen. Dabei müssen beide Teile nicht eine Verschiebebewegung ausführen, sondern können auch zueinander relativ verdreht werden. Die Torsionsfeder 40 zum Erzeugen des Drehmoments am Handhebel 20, das diesen in Richtung Schließen der Arretiervorrichtung antreibt, kann in verschiedener Weise ausgebildet sein.

## Patentansprüche

1. Arretiervorrichtung zum kraftschlüssigen Festklemmen zweier relativ zueinander beweglicher Teile, insbesondere für die Schnittwinkel- oder Schnittiefeneinstellung bei Elektrohandsägen, mit einem Bolzen, der eine radial überstehende Andruckfläche zum Anpressen an das eine Teil aufweist, und mit einem Klemmelement, das eine Andruckfläche zum Anpressen an das andere Teil aufweist und so auf dem Bolzen aufsitzt, daß durch Relativverdrehung von Klemmelement und Bolzen sich deren beide Andruckflächen zur Herstellung der Klemmung aufeinander zu- und zum Lösen der Klemmung voneinander wegbewegen, dadurch gekennzeichnet, daß das Klemmelement (18) als Handhebel (20) mit Klemmhülse (21) und davon einstückig abstrebendem Hebelarm (22) ausgebildet ist, daß die Klemmhülse (21) drehbar auf dem Bolzen (14) gehalten ist und einen über den Hebelarm (22) vorstehenden Klemmbund (211) aufweist, dessen ringförmige Stirnfläche die Andruckfläche (19) bildet, daß der Bolzen (14) in seiner äußeren Umfangsfläche mindestens eine eingetiefte Kurvenbahn (23-25) trägt, deren Bahnanfang dem freien Bolzenende und deren Bahnende (241) der Andruckfläche (17) des Bolzens (14) zugekehrt ist und deren Steigung ausgehend vom Bahnanfang in Umfangsrichtung zunächst zu- und nahe dem Bahnende (241) wieder abnimmt, und daß in der Klemmhülse (21) mindestens ein radial angeordneter, in die mindestens eine Kurvenbahn (23-25) hineinragender Führungsstift (30-32) gehalten ist.

2. Vorrichtung nach Anspruch 1, dadurch gekennzeichnet, daß der Bolzen (14) in einem bis zu seinem freien Ende reichenden Bolzenabschnitt (141) im Durchmesser reduziert ist und daß der Bahnanfang der mindestens einen eingetieften Kurvenbahn (23-25) in der am Übergang zum durchmesserreduzierten Bolzenabschnitt (141) ausgebildeten Ringschulter (26) frei austritt.

3. Vorrichtung nach Anspruch 2, dadurch gekennzeichnet, daß am Bolzen (14) ein Anschlag (33) angeordnet ist, der zur Begrenzung des axialen Verschiebewegs des Handhebels (20) auf dem Bolzen (14) mit einem an der Klemmhülse (21) angeordneten Gegenanschlag (36) zusammenwirkt, und daß die Zuordnung von Anschlag (33) und Gegenanschlag (36) so getroffen ist, daß der mindestens eine Führungsstift (30-32) nicht am Bahnanfang aus der Kurvenbahn (23-25) austreten kann.

4. Vorrichtung nach Anspruch 3, dadurch gekennzeichnet, daß der Gegenanschlag von einem im Hülseninnern radial vorspringenden Ringbund (36), dessen lichter Durchmesser wenig größer als der Außendurchmesser des durchmesserreduzierten Bolzenabschnittes (141) ist, und der Anschlag von einer am freien Bolzenende befestigten Scheibe (33) gebildet ist, deren Außendurchmesser wenig kleiner ist als der lichte Durchmesser der Klemmhülse (21).

5. Vorrichtung nach Anspruch 4, dadurch gekennzeichnet, daß die Scheibe (33) mittels einer Schraube (34) am Bolzende festgespannt ist, die in einer axialen Sackbohrung (35) im Bolzen (14) eingeschraubt ist.

6. Vorrichtung nach Anspruch 4 oder 5, dadurch gekennzeichnet, daß auf dem durchmesserreduzierten Bolzenabschnitt (141) eine Gummischeibe (37) und eine Ausgleichsscheibe (38) aufgeschoben sind, die hintereinanderliegend sich zwischen dem Ringbund (36) der Klemmhülse (21) und der Ringschulter (26) am Bolzen (14) abstützen.

7. Vorrichtung nach einem der Ansprüche 1 - 6, dadurch gekennzeichnet, daß zwischen Handhebel (20) und Bolzen (14) eine Zustellfeder (40) angeordnet ist, die am Handhebel (20) ein Drehmoment erzeugt, das eine Relativdrehung von Handhebel (20) und Bolzen (14) in Richtung einer Zustellbewegung zur Herstellung der Klemmverbindung bewirkt.

8. Vorrichtung nach Anspruch 7, dadurch gekennzeichnet, daß der Ringbund (36) der Klemmhülse (21) eine Ringnut (39) trägt, in der eine Torsionsfeder (40) eingelegt ist, die einerseits an der Klemmhülse (21) und andererseits am Bolzen (14) befestigt und vorgespannt ist.

9. Vorrichtung nach einem der Ansprüche 1 - 8, dadurch gekennzeichnet, daß der mindestens eine Führungsstift (30-32) in einer im Klemmbund (211) der Klemmhülse (21) eingebrachten Radialbohrung (27-29) eingesetzt und darin befestigt ist.

10. Vorrichtung nach einem der Ansprüche 1 - 9, dadurch gekennzeichnet, daß in der Klemmhülse (21) drei um gleiche Umfangswinkel gegeneinander versetzte Führungsstifte (30-32) vorhanden sind, die in einer gemeinsamen Querschnittsebene der Klemmhülse (21) liegen, und daß auf dem Bolzen (14) drei um entsprechende Umfangswinkel gegeneinander versetzte Kurvenbahnen (23-25) vorgesehen sind, deren Bahnanfänge einerseits und Bahnenden andererseits jeweils in einer gemeinsamen Querschnittsebene des Bolzens (14) liegen.

11. Vorrichtung nach einem der Ansprüche 1 - 10, dadurch gekennzeichnet, daß die Andruckfläche (17) des Bolzens (14) von einem am Bolzen (14), vorzugsweise einstückig, angeformten Bolzenkopf (15) gebildet ist und daß der Bolzen (14) durch Öffnungen (12,13) in den beiden zu klemmenden Teilen (10,11) hindurchgesteckt ist.

12. Vorrichtung nach Anspruch 11, dadurch gekennzeichnet, daß der Bolzen (14) in einem sich unmittelbar an den Bolzenkopf (15) anschließenden kleinen Bolzenbereich (16) beidseitig abgeflacht oder als Vierkant ausgebildet ist und daß die Öffnung (12) in dem einen Teil (10), an das sich der Bolzenkopf (15) anpreßt, zur formschlüssigen Aufnahme des Bolzenbereichs (16) ausgebildet ist.

## Claims

1. Locking device for frictionally clamping two parts movable relative to one another, in particular for setting the cutting angle or cutting depth in portable electric saws, having a bolt which has a radially projecting pressure surface for pressing against the one part, and a clamping element which has a pressure surface for pressing against the other part and sits on the bolt in such a way that, by relative rotation of clamping element and bolt, their two pressure surfaces move towards one another for producing the clamping and move away from one another for releasing the clamping, characterized in that the clamping element (18) is designed as a hand lever (20) having a clamping sleeve (21) and a lever arm (22) protruding in one piece away from the clamping sleeve (21), in that the clamping sleeve (21) is rotatably held on the bolt (14) and has a clamping collar (211) which projects beyond the lever arm (22) and the annular end face of which forms the pressure surface (19), in that the bolt (14) has in its outer peripheral surface at least one recessed curved path (23-25), the path start of which faces the free bolt end and the path end (241) of which faces the pressure surface (17) of the bolt (14) and the pitch of which first of all increases in the peripheral direction starting from the path start and decreases again close to the path end (241), and in that at least one radially arranged guide pin (30-32) projecting into the at least one curved path (23-25) is held in the clamping sleeve (21).

2. Device according to Claim 1, characterized in that the bolt (14) is reduced in diameter in a bolt section (141) extending up to its free end, and in that the path start of the at least one recessed curved path (23-25) comes out freely in the annular shoulder (26) formed at the transition to the bolt section (141) of reduced diameter.

3. Device according to Claim 2, characterized in that a stop (33) is arranged at the bolt (14), which stop (33), to limit the axial displacement of the hand lever (20) on the bolt (14), interacts with a counter-stop (36) arranged at the clamping sleeve (21), and in that the allocation of stop (33) and counter-stop (36) is made in such a way that the at least one guide pin (30-32) cannot come out of the curved path (23-25) at the path start.

4. Device according to Claim 3, characterized in that the counter-stop is formed by an annular collar (36) which projects radially in the sleeve interior and the inside diameter of which is slightly larger than the outside diameter of the bolt section (141) of reduced diameter, and the stop is formed by a disc (33) which is fastened to the free bolt end and the outside diameter of which is slightly smaller than the inside diameter of the clamping sleeve (21).

5. Device according to Claim 4, characterized in that the disc (33) is fastened to the bolt end by means of a screw (34) which is screwed into an axial blind hole (35) in the bolt (14).

6. Device according to Claim 4 or 5, characterized in that a rubber disc (37) and a compensating disc (38) are slipped onto the bolt section (141) of reduced diameter, which rubber disc (37) and compensating disc (38) are supported lying one behind the other between the annular collar (36) of the clamping sleeve (21) and the annular shoulder (26) on the bolt (14).

7. Device according to one of Claims 1 to 6, characterized in that an adjusting spring (40) is arranged between hand lever (20) and bolt (14), which adjusting spring (40) produces a torque on the hand lever (20), which torque produces a relative rotation between hand lever (20) and bolt (14) in the direction of an adjusting movement for producing the clamped connection.

8. Device according to Claim 7, characterized in that the annular collar (36) of the clamping sleeve (21) has an annular groove (39) in which a torsion spring (40) is inserted which is fastened on the one hand to the clamping sleeve (21) and on the other hand to the bolt (14) and is pretensioned.

9. Device according to one of Claims 1 to 8, characterized in that the at least one guide pin (30-32) is inserted and fastened in a radial bore (27-29) made in the clamping collar (211) of the clamping sleeve (21).

10. Device according to one of Claims 1 to 9, characterized in that there are three guide pins (30-32) in the clamping sleeve (21) which are offset from one another by equal circumferential angles and lie in a common cross-sectional plane of the clamping sleeve (21), and in that three curved paths (23-25) which are offset from one another by corresponding circumferential angles are provided on the bolt (14), the path starts of which on the one hand and path ends of which on the other hand in each case lie in a common cross-sectional plane of the bolt (14).

11. Device according to one of Claims 1 to 10, characterized in that the pressure surface (17) of the bolt (14) is formed by a bolt head (15) integrally formed, preferably in one piece, on the bolt (14), and in that the bolt (14) is pushed through openings (12, 13) in the two parts (10, 11) to be clamped.

12. Device according to Claim 11, characterized in that the bolt (14) is flattened on both sides or designed as a square in a small bolt area (16) directly adjoining the bolt head (15), and in that the opening (12) is formed in the one part (10) against which the bolt head (15) presses for the positive-locking reception of the bolt area (16).

## Revendications

1. Dispositif d'arrêt pour serrer par une liaison de force, deux pièces mobiles l'une relativement à l'autre, notamment pour régler l'angle de coupe ou la profondeur de coupe d'une scie électrique portative, comprenant un goujon présentant une surface d'appui radialement en saillie et servant à s'appuyer contre l'une des pièces, ainsi qu'un élément de serrage ayant une surface d'appui pour s'appuyer contre l'autre pièce et cet élément étant monté sur le goujon, la rotation relative de l'élément de serrage et du goujon faisant que les deux surfaces d'appui se rapprochent pour réaliser le serrage et s'écartent pour desserrer le serrage, dispositif caractérisé en ce que l'élément de serrage (18) est un levier manuel (20) muni d'une douille de serrage (21) avec un bras de levier (22) en saillie et faisant corps avec celle-ci, la douille de serrage (21) étant maintenue en rotation sur le goujon (14) et comportant une collerette de serrage (211) dépassant du bras de levier (22), collerette dont la surface frontale annulaire constitue la surface d'appui (19), le goujon (14) étant muni dans sa surface périphérique extérieure, d'au moins un chemin courbe en creux (23-25) dont l'origine est tournée vers l'extrémité libre du goujon et dont la fin (241) est tournée vers la surface d'appui (17) du goujon (14), la pente de ce chemin augmentant tout d'abord à partir de l'origine du chemin, dans la direction périphérique, pour diminuer de nouveau vers la fin (241) du chemin, et la douille de serrage 21 comporte au moins une tige de guidage (30-32), radiale, pénétrant dans un chemin courbe (23-25).

2. Dispositif selon la revendication 1, caractérisé en ce que le goujon (14) présente un diamètre réduit sur un segment (141) allant jusqu'à son extrémité libre, et l'origine d'au moins un chemin courbe en creux (23-25) débouche librement dans l'épaulement annulaire (26) réalisé à la jonction avec le segment de diamètre réduit (141) du goujon.

3. Dispositif selon la revendication 2, caractérisé en ce que le goujon (14) comporte une butée (33) qui, pour limiter la course axiale du levier manuel (20) sur le goujon (14), coopère avec une contrebutée (36) prévue sur la douille de serrage (21), et en ce que l'association entre la butée (33) et la contrebutée (36) est telle qu'au moins une tige de guidage (30-32) ne puisse sortir du chemin courbe (23-25) à son origine.

4. Dispositif selon la revendication 3, caractérisé en ce que la contrebutée est formée par une collerette annulaire (36) radialement en saillie à l'intérieur de la douille et dont le diamètre libre est inférieur au diamètre extérieur du segment de goujon (141) de diamètre réduit, et en ce que la butée est formée par une rondelle (33) fixée à l'extrémité libre du goujon et dont le diamètre extérieur est légèrement inférieur au diamètre libre de la douille de serrage (21).

5. Dispositif selon la revendication 4, caractérisé en ce que la rondelle (33) est serrée par une vis (34) à l'extrémité du goujon, cette vis étant logée dans un taraudage borgne (35), axial, du goujon (14).

6. Dispositif selon la revendication 4 ou 5, caractérisé en ce qu'une rondelle en caoutchouc (37) et une rondelle de compensation (38) sont glissées sur le segment de goujon (141) de diamètre réduit, ces rondelles s'appuyant l'une derrière l'autre entre la collerette annulaire (36) de la douille de serrage (21) et l'épaulement annulaire (26) sur le goujon (14).

7. Dispositif selon l'une des revendications 1-6, caractérisé en ce qu'entre le levier manuel (20) et le goujon (14), il y a un ressort de réglage (40) qui applique un couple au levier manuel (20) assurant une rotation relative du levier (20) et du goujon (14) dans le sens d'un mouvement de réglage établissant la liaison de serrage.

8. Dispositif selon la revendication 7, caractérisé en ce que la collerette annulaire (36) de la douille de serrage (21) est munie d'une rainure annulaire (39) logeant un ressort de torsion (40) dont une extrémité est fixée à la douille de serrage (21) et dont l'autre extrémité est fixée au goujon (14) avec précontrainte.

9. Dispositif selon l'une des revendications 1-8, caractérisé en ce qu'au moins une tige de guidage (30-32) est logée et fixée dans un perçage radial (27-29) de la collerette de serrage (211) de la douille de serrage (21).

10. Dispositif selon l'une des revendications 1-9, caractérisé en ce que la douille de serrage (23) comporte trois tiges de guidage (30-32) décalées du même angle périphérique et placées dans un plan de coupe transversal commun de la douille de serrage (21), et en ce que le goujon (14) comporte trois chemins courbes (23-25) décalés les uns par rapport aux autres d'un angle périphérique correspondant, tandis que, d'une part, l'origine des chemins, et, d'autre part, la fin des chemins, se situent chaque fois dans un plan de coupe transversal commun du goujon (14).

11. Dispositif selon l'une des revendications 1-10, caractérisé en ce que la surface d'appui (17) du goujon (14) est constituée par une tête de goujon (15) prévue sur ce goujon (14) et faisant de préférence corps avec celui-ci, et en ce que le goujon (14) est engagé dans des orifices (12, 13) des deux pièces (10, 11) à serrer.

12. Dispositif selon la revendication 11, caractérisé en ce que le goujon (14) est aplati sur deux faces dans une petite zone (16) directement adjacente à la tête (15), ou encore est réalisé en forme de zone à quatre pans l'ouverture (12) de l'une des pièces (10) contre laquelle est pressée la tête de goujon (15), étant réalisée de façon à recevoir la zone de goujon (16) avec une liaison de forme.
